# EUROPÄISCHE PATENTSCHRIFT

(11) **EP 1 176 342 B1**
(45) Veröffentlichungstag und Bekanntmachung des Hinweises auf die Patenterteilung: **23.08.2006**
(21) Anmeldenummer: 01112402.1
(22) Anmeldetag: 21.05.2001
(51) Int. Cl.: F16J 15/08

(54) **Zylinderkopfdichtung mit elastischer Stopperlage**
Cylinder head gasket with elastic compression stopper
Joint de culasse avec cale élastique

(30) Priorität: 24.07.2000 DE 10035969
(43) Veröffentlichungstag der Anmeldung: 30.01.2002
(60) Teilanmeldung: 05024204.9
(73) Patentinhaber: Federal-Mogul Sealing Systems GmbH, 57562 Herdorf (DE)
(72) Erfinder: Schmitt, Klaus, 57520 Grünebach (DE); Cierocki, Klaus, c/o Federal-Mogul Sealing Systems, 57562 Herdorf (DE)
(74) Vertreter: Becker Kurig Straus

(56) Entgegenhaltungen:
- EP-A- 0 711 937
- EP-A- 0 717 218
- EP-A- 0 809 051
- EP-A- 0 845 621
- DE-A- 2 220 536
- DE-A- 19 721 063
- DE-U1- 29 912 950
- US-A- 4 869 516
- US-A- 5 435 575
- US-A- 5 560 623
- US-A- 5 791 659

## Beschreibung

Die vorliegende Erfindung betrifft eine metallische Zylinderkopfdichtung gemäß dem Oberbegriff der Ansprüche 1 und 2. Eine derartige Zylinderkopfdichtung ist beispielsweise aus der JP-4-191570 bekannt.

Aus der EP 0695896 A1 ist bereits eine metallische Dichtung bekannt, die eine in ihrem dem Brennkammerraum zugewandten Bereich verdickte Stopperlage aufweist. Diese Stopperlage weist jedoch keine ausreichende Flexibilität auf.

Aus der gattungsbildenden JP-4-191570 ist eine metallische Zylinderkopfdichtung bekannt, bei der die Ringeinlage sich axial an die Dichtungslage anschließt. Dadurch wird keine ausreichende radiale Dicke der Stopperlage erzielt.

Aus der EP 0780561 B1 ist schließlich bereits eine metallische Zylinderkopfdichtung bekannt, die in Ihrem Randbereich eine als Federwegbegrenzer ausgebildete verdickte bzw. durch Trapezsicken gebildete Stopperlage aufweist. Auch diese Stopperlage ist nicht geeignet, den im heutigen Automobilbau gesetzten Elastizitätsanforderungen voll zu genügen.

Aus dem Dokument US-A-4 869 516 ist eine Stahlschichtdichtung bekannt, die eine erste Lage mit mindestens einem ersten Loch, eine zweite Lage, die der ersten Lage benachbart ist, und mindestens eine Vertiefung aufweist, die entweder auf der ersten oder der zweiten Lage gebildet ist und dich in Richtung der andern erstreckt. Die zweite Lage ist dabei mit mindestens einem zweiten Loch und einer Wulst bzw. Sicke versehen, die sich um das zweite Loch erstreckt. Die Sicke erstreckt sich im Wesentlichen senkrecht zu einer horizontalen Lage der zweiten Lage in Richtung der ersten Lage, um an die erste Lage anzustoßen bzw. anzugrenzen. In US-A-4 869 516 ist die Höhe der Vertiefung im Wesentlichen gleich oder ein wenig geringer als die der Sicke, sodass wenn die erste und die zweite Lage an der Vertiefung durch Punktschweißen miteinander verbunden werden, die erste und zweite Lage im Wesentlichen parallel zueinander gehalten werden.

Bei Zylinderkopfdichtungen kommt es häufig zu einer relativ starken Entlastung der Stopperzonen, die durch die motorischen Betriebsdaten bedingt ist. In derartigen Fällen kommt es zu einem so genannten "Überblasen" von Schleichgasen, die durch die nachgeschaltete Vollsicke zu kompensieren bzw. abzudichten ist. In diesen Fällen kann es jedoch bei nicht ausreichender Belastung der Vollsicken zu einer Undichtigkeit kommen, die sich in einem Druckabfall bemerkbar macht.

Des Weiteren kommt es im Motorverband zu einer unregelmäßigen Belastung der Dichtung entlang der Brennräume aufgrund der Verspannungssituation. Im so genannten schraubenfemen Bereich kommt es im Allgemeinen zu einer deutlich schwächeren Belastung der Dichtzonen, die nur unter sehr großem Aufwand in den Griff zu bekommen ist.

Aufgabe der vorliegenden Erfindung ist es daher, die aus dem Stand der Technik bekannten gattungsgemäßen Zylinderkopfdichtungen derart weiterzuentwickeln, dass die Stopperzonen in radialer Richtung elastischer bzw. flexibler ausgebildet werden.

Dies wird nach einer Lösung der Aufgabe bei einer gattungsgemäßen metallischen Zylinderkopfdichtung nach Anspruch 1 dadurch erreicht, dass die Ringeinlage mit dem flachen Abschnitt verbunden ist und in der radialen Ebene des flachen Abschnitts die Ringeinlage eine Sicke aufweist. Damit weist die elastische Abdichtzone eine Sicke auf und der an die Sicke angrenzende Bereich, vorzugsweise ein planer Bereich, ist mit der Dichtungslage verbunden. Dadurch wird die Dichtpressung im Bereich der Abdichtzone lokal erhöht und dadurch die Abdichtzone stärker flexibilisiert als es im Stand der Technik der Fall war.

Die Sicken können bevorzugt Vollsicken oder Halbsicken (auch Kröpfungen) sein. Die an die Sicke angrenzenden Bereiche sind bevorzugt plan, damit sie mit der angrenzenden Schicht geeignet verbunden, vorzugsweise verschweißt werden können. Auch die Ringeinlage ist bevorzugt mit der Dichtungslage verschweißt.

Weitere Vorteile, Merkmale und Anwendungsmöglichkeiten der vorliegenden Erfindung ergeben sich aus der nachfolgenden Beschreibung von 2 Ausführungsbeispielen in Verbindung mit der Zeichnung.

Fig. 1 ist ein Querschnitt durch eine erste Ausführungsform der metallischen Zylinderkopfdichtung gemäß der Erfindung.

Fig. 2 ist eine Querschnittsansicht einer zweiten Ausftihrungsform der metallischen Zylinderkopfdichtung gemäß der Erfindung.

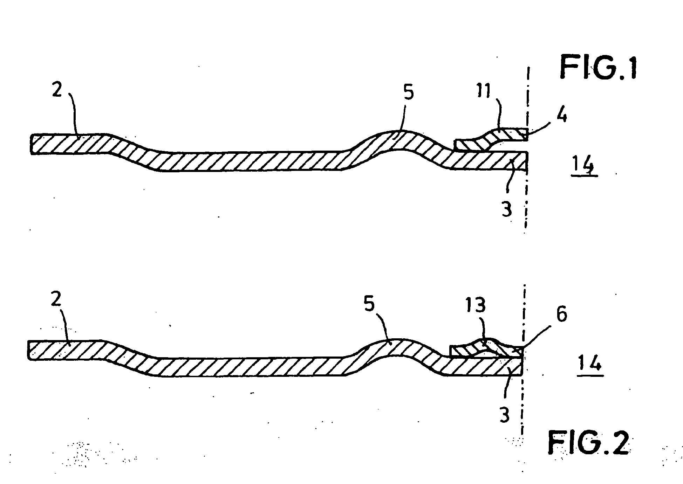

In der in Fig. 1 gezeigten Ausführungsform einer metallischen Zylinderkopfdichtung gemäß der Erfindung ist eine als Funktionslage ausgebildete metallische Dichtungslage 2 gezeigt, die in ihrem an den Brennraum 14 grenzenden Bereich mit entsprechenden Öffnungen entsprechend den Brennkammern ausgestattet ist. Die Dichtungslage besitzt eine Vollsicke 5, die zur elastischen Abdichtung der Brennkammern dient und die Öffnungen umschließt. Ferner hat die Dichtungslage einen flachen Abschnitt 3, der sich unmittelbar bis an die Öffnung bzw. an die Brennkammer erstreckt. Mit dem flachen Abschnitt 3 ist in radialer Überlappung eine Ringeinlage 4 verschweißt. Die metallische Ringeinlage 4 weist eine Kröpfung bzw. Halbsicke 11 auf. Die Ringeinlage 4 ist mit ihrem von dem Brennraum 14 abgewandten Bereich mit der Dichtungslage 2 verschweisst. Dadurch wird die Stopperzone radial verstärkt und flexibilisiert. Die Kröpfung bzw. Halbsicke 11 ist in der Ringeinlage 4 gebildet. Die Sicke 5 grenzt axial an den flachen Abschnitt 3. Der flache Abschnitt 3 wird praktisch vollständig von der Ringeinlage 4 überdeckt.

In der in Fig. 2 (ähnlich Fig. 1) gezeigten Ausführungsform einer metallischen Zylinderkopfdichtung gemäß der Erfindung ist die Dichtungslage 2 ebenfalls als Funktionslage ausgebildet und weist in ihrem an den Brennraum 14 angrenzenden Bereich eine Ringeinlage 6 auf, die eine Sicke 13 (Vollsicke) aufweist. Die Ringeinlage 6 ist beiderseits der Sicke 13 mit dem flachen Abschnitt 3 der Dichtungslage 2 verschweißt. Die Sicke 13 ist eine Vollsicke, die die Elastizität bzw. Dichtpressung in der Stopperzone lokal erhöht. Die Anordnung der Sicke 5 und des flachen Abschnitts 3 entsprechen der Fig. 1.

Mit allen Ausführungsformen der Erfindung wird die Elastizität des radial an die Brennkammern grenzenden Stopperbereichs erhöht, um einer möglichen Undichtigkeit bei Druckabfall vorzubeugen. Das so genannte "Überblasen" von Schleichgasen wird wirksam vermieden.

Alternativ kann die Dichtungslage 2 auch als plane Distanzlage ausgebildet sein. Alternativ können auch bei dem ersten und zweiten Ausführungsbeispiel die Dichtungslagen 2 zusätzlich mit einer Sicke, Halbsicke oder Kröpfung versehen werden.

## Patentansprüche

1. Metallische Zylinderkopfdichtung aufweisend mindestens eine Dichtungslage (2) mit Öffnungen entsprechend den Brennkammern (14) bei Brennkraftmaschinen, einem flachen Abschnitt (3), der um die Öffnungen herum angeordnet ist und einer Vollsicke (5), die benachbart dem flachen Abschnitt (3) die Öffnungen umschließt, wobei die Dichtungslage (2) in ihrem dem Brennraum (14) zugewandten Bereich mit einer Ringeinlage (4, 6) versehen ist, um eine elastische Abdichtzone am Rand des Brennraumes (14) zu erzeugen, **dadurch gekennzeichnet, dass** die Ringeinlage (4, 6) mit dem flachen Abschnitt (3) verbunden ist und dass in der radialen Ebene des flachen Abschnitts (3) die Ringeinlage (4, 6) eine Sicke (11, 13) aufweist.

2. Metallische Zylinderkopfdichtung nach Anspruch 1, **dadurch gekennzeichnet, dass** die Sicke (11) eine Halbsicke ist.

3. Metallische Zylinderkopfdichtung nach den Ansprüchen 1 oder 2, **dadurch gekennzeichnet, dass** die Ringeinlage (4, 6, 8) mit der Dichtungslage (2,10) verschweißt ist.

4. Metallische Zylinderkopfdichtung nach den Ansprüchen 2 bis 3, **dadurch gekennzeichnet, dass** die Sicke (13) eine Vollsicke ist.

## Claims

1. Metal cylinder head gasket comprising at least one sealing plate (2) having openings commensurate with the combustion chambers (14) in internal combustion engines, a flat section (3), which is arranged around the openings and a full bead (5), which surrounds the openings adjacent to the flat section (3), wherein the sealing plate (2) in its region directed towards the combustion chamber (14) is provided with a ring liner (4, 6), in order to create a flexible sealing zone on the edge of the combustion chamber (14), **characterized in that** the ring liner (4, 6) is joined to the flat section (3), said ring liner (4, 6) in the radial plane of the flat section (3) comprising a bead (11, 13).

2. Metal cylinder head gasket according to Claim 1, **characterized in that** the bead (11) is a half bead.

3. Metal cylinder head gasket according to Claims 1 or 2, **characterized in that** the ring liner (4, 6, 8) is welded to the sealing plate (2, 10).

4. Metal cylinder head gasket according to Claims 2 to 3, **characterized in that** the bead (13) is a full bead.

## Revendications

1. Joint de culasse métallique présentant au moins une position de joint (2) avec des ouvertures en fonction des chambres de combustion (14) sur des moteurs à combustion interne, une partie (3) plate, qui est disposée tout autour des ouvertures et une moulure pleine (5), qui entoure les ouvertures à proximité de la partie (3) aplatie, la.position de joint (2) étant dotée d'une insertion annulaire (4, 6) dans sa zone tournée vers l'espace de combustion (14), afin de générer une zone d'étanchéité élastique sur le bord de l'espace de combustion (14), **caractérisé en ce que** l'insertion annulaire (4, 6) est reliée à la partie (3) plate et **en ce que** l'insertion annulaire (4, 6) présente une moulure (11, 13) dans le plan radial de la partie (3) plate.

2. Joint de culasse métallique selon la revendication 1, **caractérisé en ce que** la moulure (11) est une demi-moulure.

3. Joint de culasse métallique selon la revendication 1 ou 2, **caractérisé en ce que** l'insertion annulaire (4, 6, 8) est soudée avec la position de joint (2, 10).

4. Joint de culasse métallique selon les revendications 2 à 3, **caractérisé en ce que** la moulure (13) est une moulure pleine.
